(19) Europäisches Patentamt
European Patent Office
Office européen des brevets

(11) EP 1 887 048 A1

(12) # EUROPEAN PATENT APPLICATION
published in accordance with Art. 153(4) EPC

(43) Date of publication:
**13.02.2008 Bulletin 2008/07**

(21) Application number: **05745472.0**

(22) Date of filing: **02.06.2005**

(51) Int Cl.:
***C09C 1/48*** *(2006.01)* ***C09C 1/56*** *(2006.01)*

(86) International application number:
**PCT/JP2005/010169**

(87) International publication number:
**WO 2006/129363 (07.12.2006 Gazette 2006/49)**

(84) Designated Contracting States:
**DE FR GB IT**

(71) Applicant: **KONICA MINOLTA BUSINESS TECHNOLOGIES, INC.**
**Chiyoda-ku**
**Tokyo 100-0005 (JP)**

(72) Inventors:
- **UCHIDA, M.,**
**KONICA MINOLTA BUSINESS TECH., INC.**
**Tokyo 100-0005 (JP)**
- **ASAI, Shingo,**
**KONICA MINOLTA BUSINESS TECH., INC.**
**Tokyo 100-0005 (JP)**
- **GO, Chihi,**
**East China University of Sci. and Tech.**
**Shanghai 200237 (CN)**

(74) Representative: **Gille Hrabal Struck Neidlein Prop Roos**
**Patentanwälte**
**Brucknerstrasse 20**
**40593 Düsseldorf (DE)**

(54) **CARBON BLACK**

(57) Carbon black, comprising particles having a number average particle size of Feret's diameter of 2 to 100 nm and an average roundness of 100 to 130.

EP 1 887 048 A1

## Description

Technical Field

The present invention relates to carbon black containing carbon black particles having a number average particle size of Feret's diameter of 2 to 100 nm and a roundness of 100 to 130. In particular, the present invention relates to carbon black that has been widely used in many fields, such as rubber industries and plastic industries, and applications, such-as oil ink, paints and dry batteries.

Background Art

Since carbon black is superior in coloring property, conductivity, weather resistance, chemical resistance and the like, the carbon black has been widely used for various applications, such as reinforcing agents for plastics and elastomers, and fillers.
Normally, the carbon black is composed of secondary particles formed by a plurality of basic particles that are chemically and/or physically combined with one another, that is, an aggregate (referred to also as a structure) (Fig. 4). This aggregate has a complex aggregated structure that is branched into irregular chain forms. The some aggregates are also formed into secondary aggregates by a Van der Waals force or through simple aggregation, adhesion, entangling, or the like. Therefore, carbon black has a broad distribution of shape. When such a carbon black is dispersed in, for example, resin or rubber, and then molded, the resulting molded product becomes insufficient in degree of gloss and finish on its surface.
In addition, the aggregate carbon black, which is uneven in its shape, is under the influence of the uneven dispersion and fluidity inherent to its shape during dispersion in a desirable medium. It was also difficult to obtain final products uniform in their optical and mechanical properties with carbon black, for example as dispersed in a resin, because irregular properties of individual uneven shaped particles, which differ significantly in optical, mechanical, and electrical characteristics.

Disclosure of Invention

Technical Problems to be Solved

The present invention has been made to solve the above-mentioned problems, and one object thereof is to provide a novel carbon black containing carbon black particles having a number average particle size of Feret's diameter of 2 to 100 nm and an average roundness of 100 to 130.
Another object of the present invention is to provide carbon black in which primary particles are maintained in a stable state.
Still another object of the present invention is to provide carbon black that is superior in dispersibility and flowability.
Still another object of the present invention is to provide carbon black which, when mixed with a resin or the like, can provide superior surface finish and surface gloss to the resulting molded product and can also increase the mechanical strength thereof.

Means to Solve the Problems

The above-mentioned objects can be achieved by the following (1) to (5).

(1) A carbon black, containing carbon black particles having a number average particle size of Feret's diameter of 2 to 100 nm and an average roundness of 100 to 130.
(2) The carbon black of (1), wherein primary particles are contained at a content of 5% or more on a number basis.
(3) The carbon black of (1) or (2), wherein an organic compound having or being able to generating an active free radical is grafted on the carbon black.
(4) The carbon black of (3), wherein the organic compound includes at least one of a phenol-based compound and an amine-based compound.
(5) A carbon black, containing carbon black particles having a number average particle size of Feret's diameter of 2 to 100 nm and an average roundness of 100 to 130 at a content of 10% or more on a number basis.

When a carbon black satisfies the requirements (1) to (4) above, it is superior in dispersibility and fluidity and easier in handling as powder, and gives, as mixed with a resin, a molded product superior in surface finish and surface glossiness and improved in mechanical strength.
The inventors have conducted intensive studies to solve the problems above. Conventional carbon blacks often form an aggregate structure and hardly give a microdispersion structure. Studies for the reason revealed that the distribution of particle shape was involved. It was assumed that the dispersion was insufficient in the presence of carbon black particles different in size because the behavior of individual particles is uneven and particles different in shape adhere to each other, for example by Van der Waals force and the resistance of particle surface, forming aggregates easily. It was assumed that large difference in shape leads to significant variation of the behavior of individual particles to the medium, resulting in insufficient properties. The fact indicates that it is possible to control aggregation of particles and uniformize the particle behavior by adjusting the shape of the particles as same as possible.

The following description will discuss primary particles in the present application. Normally, carbon black is present in an aggregate form, and the aggregate is a form, in which plurality of basic particles are chemically and/or physically aggregated. In the present application, the primary particles refer to the basic particles. However, the primary particles do not refer to the basic particles in a state in which the basic particles form an aggregate, but refer to particles that are present stably in a state in which the basic particles are separate from the aggregate. Secondary particles in the present application refer to an aggregate formed by aggregating the basic particles. Here, in the present application, secondary aggregates formed by aggregation of the aggregates are generally referred to as secondary particles.

Fig. 2 is a drawing illustrating the relationship between secondary particles and basic particles. The state formed by aggregating the basic particles is defined as a secondary particle. Fig. 3 represents a state in which basic particles that have formed secondary particles are separated from the secondary particles and are stably maintained, and this particle that is present as a single basic particle is defined as a primary particle.

The description will be further given as follows.

(1) number average particle size of Feret's diameter

The carbon black of the present invention has preferably a number average particle size of Feret's diameter in the range from 2 to 100 nm. The range is preferably from 10 to 100 nm, particularly preferably from 10 to 80 nm.
By providing this range, the carbon blacks can be dispersed densely on the surface of, for example, a resin molded product, and the surface characteristics can be improved.

Here, an object to be measured in a number average particle size of Feret's diameter is each of the primary particles and the secondary particles of carbon black that are present in a stable state. In the case of carbon black that is present as an aggregate, the aggregate is the object to be measured, and the basic particles in the aggregate are not measured.
The controlling process into this number average particle size can be achieved by the following operations: the particles of the carbon black that are present as an aggregate and have basic particle sizes within the above-mentioned range are properly selected and processed, or conditions during the production process for dividing the aggregate into primary particles are altered.

The number average particle size of Feret's diameter can be observed by means of an electron microscope. Upon finding the number average particle size of Feret's diameter from carbon black simple substance, an enlarged photograph may be taken at magnification of 100000 by using a scanning electron microscope (SEM), and 100 particles may be properly selected to calculate the number average particle size of Feret's diameter.
In the case when the average particle size of carbon black is found from a molded product such as a resin, an enlarged photograph may be taken at magnification of 100000 by using a transmission electron microscope (TEM), and 100 particles may be properly selected to calculate the number average particle size.

The Feret's diameter, used in the present invention, refers to the largest length in a predetermined one direction of each of carbon black particles, among carbon black particles photographed by using the above-mentioned electron microscope. The largest length represents a distance between parallel lines, that is, two parallel lines that are drawn perpendicular to the predetermined one direction so as to be made in contact with the outer diameter of each particle.

For example, in Fig. 2, with respect to a photograph 300 of carbon black particles 200 taken by using an electron microscope, one direction 201 is arbitrarily determined. The distance between two straight lines 202 that are perpendicular to the predetermined direction 201 and made in contact with each carbon black particle 200 represents a Feret's diameter 203.

The carbon black of the present invention is preferably designed to have a number average particle size of Feret's diameter of the primary particles of 2 to 100 nm, and particularly 3 to 80 nm. By using the carbon black within this range, the mechanical properties of resin can be more increased. The degree of gloss of the molded product can be improved, and a superior finished state can be achieved. The method for measuring the number average particle size of the primary particles is the same as the measuring method for the number average particle size of the carbon black. Here, the number of measured particles corresponds to 100 primary particles.

(2) Rate of Primary Particles

The carbon black of the present invention contains preferably 5% or more of primary particles in the carbon

black on a basis of number. The upper limit is 100%. The rate preferably varies depending on the industrial fields to which it is applied. As the rate of content of the primary particles increases, the better performance is obtained in the product in the industrial field. In the case of resin molded products, mechanical strength, surface gloss property and the like can be improved. More specifically, the better results can be obtained in the order of 10% or more, 20% or more, 30% or more, 40% or more and 50% or more. Upon measuring the rate of the primary particles, particles to be measured are observed by means of a transmission electron microscope to count primary particles present in 1000 particles to be measured for calculation.

The carbon black according to the present invention may be mixed with a carbon black having a particle size distribution different from the carbon black according to the present invention. The average particle size of the carbon black in such a mixture and the blending ratio thereof to the carbon black according to the present invention are to be determined according to the need in its application field.

(3) Roundness of carbon black

The carbon black according to the present invention has an arithmetic mean value of the roundness of carbon black particle in the range of 100 to 130, preferably 100 to 120, and more preferably 100 to 115.
A carbon black having a mean value in the range above is superior in viscosity properties and thus, has more distinctive uniform dispersibility. Such a carbon black is more consistent in shape and leads to improvement in the optical properties such as surface finish and glossiness and the mechanical properties of final resin-moldedproducts and others.

The average value of the carbon black roundness can be determined in the following manner:

A projected photography of carbon black is taken by means of a transmission electron microscope (TEM) at magnification of 100,000 times. The roundness of each of these carbon black particles is then calculated according to the following Formula 1.

(Formula 1) Roundness = {(Maximum diameter/2)2×π}/Projected area

In the Formula above, the roundness is 100 when the particle is completely circular and larger when the particle becomes indefinite in shape. It is possible to control the roundness by adjusting the rate of the basic particles or by classifying the carbon black having a roundness in the range above.

(4) carbon black containing carbon black particles having a roundness of 100 to 130 at a number-based rate of 10% or more and having a number-average particle size of Feret's diameter of 2 to 100 nm The number-average particle size of Feret's diameter and the roundness are the same as those described above. One hundred carbon black particles having a roundness of 100 to 130 were observed by means of a scanning electron microscope (SEM) at magnification of 100,000 times, and the results are calculated on a number basis. Carbon black particles having a roundness of 100 to 130 are preferably contained at a number-based rate of 20% or more, preferably 50% or more. The electron microscope may be replaced with a transmission electron microscope (TEM) as needed.

(5) Carbon Black

The carbon black of the present invention is preferably designed so that the surface of each of carbon black particles that are stably present finally is surface-treated (including a graft treatment) with an organic compound or the like. Supposing that the amount of an organic compound prior to the reaction is Y and that the amount of the extracted organic compound is Z, the rate of graft treatment is represented by ((Y - Z) / Y) × 100(%).
The rate of graft treatment is preferably set to 50% or more. As the surface treatment is carried out more uniformly, the dispersibility is further improved.

The carbon black of the present invention is preferably subjected to a graft treatment with an organic compound that has active free radicals or is capable of producing active free radicals, which will be described later. With this arrangement, it is possible to improve the dispersibility in a medium and also to improve mechanical strength.

(6) Production Method of Carbon Black

The following description will discuss a preferable production method of carbon black in accordance with the

present invention.
A preferable production method to be applied to the present invention is provided with at least the following processes:

(A) Surface treatment process, in which the surface of carbon black containing secondary particles made of at least aggregates (structure) of basic particles is treated with an organic compound that has active free radicals or is capable of producing active free radicals; and
(B) A process, in which, by applying a mechanical shearing force to the carbon black containing at least secondary particles to give primary particles, and an organic compound is grafted onto a separation face from which the separation is made from the secondary particle.

The following description will discuss the processes (A) and (B) in detail.
(A) The surface treatment process, in which at least the surface of carbon black containing secondary particles made of at least aggregates (structure) of basic particles is treated with an organic compound that has active free radicals or is capable of producing active free radicals.
In this process, the surface of carbon black composed of aggregates (structure) is surface-treated with the above-mentioned organic compound.
In the present process, radicals are generated on the surface of a structure that is the minimum aggregation unit by applying heat or a mechanical force thereon, and the surface treatment is carried out by using an organic compound capable of capturing the radicals. By this process, re-aggregated portions that have been aggregated again by a strong aggregating force between the carbon blacks can be effectively reduced, so that the structure and the primary particles of the carbon black can be prevented from being aggregated and adhered.
The surface treatment includes a process in which an organic compound is adsorbed on the surface and a process in which the organic compound is grafted thereon. In order to stabilize the particles that have been formed into primary particles, the organic compound is preferably grafted onto the entire surface of a secondary particle at portions except for the surface where separation is made from the secondary particle. In order to allow the primary particles to be stably present after the grafting process, which will be described later, it is preferable to graft the organic compound onto the surface of the carbon black in this process.
With respect to the method for the surface treatment, for example, a method in which carbon black aggregates and an organic compound that has active free radicals or is capable of generating active free radicals are mixed with each other may be used. The surface treatment preferably includes a mixing process in which a mechanical shearing force is applied. That is, it is presumed that, in the process in which the mechanical shearing force is applied thereto, the surface of secondary particles of the carbon black is activated, and that the organic compound itself is activated by the shearing force to easily form a radicalized state, with the result that the grafting process of the organic compound onto the surface of the carbon black is easily accelerated.
In the surface treatment process, a device that is capable of applying a mechanical shearing force is preferably used.
The preferable mixing device to be used in the surface treatment process includes: a Polylabo System Mixer (Thermo Electron Co., Ltd.), a refiner, a single-screw extruder, a twin-screw extruder, a planetary extruder, a cone-shaped-screw extruder, a continuous kneader, a sealed mixer, a Z-shaped kneader and the like.
When upon carrying out the surface treatment, the above-mentioned device is used, the degree of filling of mixture in the mixing zone of the mixing device is preferably set to 80% or more. The degree of filling is found by the following equation:

$$Z = Q/A$$

Z: degree of filling (%) Q: volume of filled matter ($m^2$) A: volume of cavity of mixing section ($m^2$)
In other words, by providing a highly filled state during the mixing process, the mechanical shearing force can be uniformly applied to the entire particles. When the degree of filling is low, the transmission of the shearing force becomes insufficient to fail to accelerate the activity of the carbon black and the organic compound, with the result that the grafting process might hardly progress.
During the mixing process, the temperature of the mixing zone is set to the melting point of the organic compound or more, preferably within the melting point +200°C, more preferably within the melting point +150°C. In the case when a plurality of kinds of organic compounds are mixed, the temperature setting is preferably carried out with respect to the melting point of the organic compound having the highest melting point.
During the mixing process, irradiation of electromagnetic waves, such as ultrasonic waves, microwaves, ultraviolet rays and infrared rays, ozone function, function of an oxidant, chemical function and/or mechanical shearing force function may be used in combination so that the degree of the surface treatment and the process time can be altered. The mixing

time is set to 15 seconds to 120 minutes, although it depends on the desired degree of the surface treatment. It is preferably set to 1 to 100 minutes.

The organic compound to be used for the surface treatment is added to 100 parts by weight of carbon black, within the range from 5 to 300 parts by weight, to carry out the surface treatment process. More preferably, it is set to 10 to 200 parts by weight. By adding the organic compound within this range, it is possible to allow the organic compound to uniformly adhere to the surface of the carbon black, and also to supply such a sufficient amount that the organic compound is allowed to adhere to separated faces to be generated at the time when the secondary particles are formed. For this reason, it becomes possible to effectively prevent decomposed primary particles from again aggregating, and also to reduce the possibility of losing inherent characteristics of the carbon black in the finished carbon black, due to an excessive organic compound contained therein when excessively added beyond the above-mentioned amount of addition.

(B) The process in which, by applying a mechanical shearing force to carbon black containing at least secondary particles to give primary particles, and an organic compound is grafted onto separated faces from which the separation is made from the secondary particle.

The present process corresponds to a process in which the carbon black having reduced re-aggregation portions by the surface treatment process is cleaved so that secondary particles are formed into primary particles and the organic compound is grafted onto the surface thereof so that stable primary particles are formed. That is, for example, a mechanical shearing force is applied to the carbon black that has been surface-treated with the organic compound, and while the aggregated portion of basic particles is being cleaved, the organic compound is grafted onto the cleaved portion so that the re-aggregation of the carbon black is suppressed. When the mechanical shearing force is continuously applied to the carbon black, the cleaved portion is expanded, and the organic compound is grafted onto the separated faces caused by the cleavage while being formed into primary particles. Thus, at the time when the separation is finally made to form primary particles, no active portions capable of aggregating are present so that stable primary particles are prepared. In this case, since the same mechanical shearing force is also applied to the added organic compound, the organic compound itself is activated by the mechanical shearing force so that the graft treatment is accelerated.

In the present specification, the term, "carbon black to which an organic compound is grafted" refers to carbon black having a carbon black portion to which an organic compound portion is grafted. Moreover, the term "grafting" means an irreversible addition of an organic compound to a matrix such as carbon black, as defied in "Carbon Black" written by Donnet (Jean-Baptiste Donnet)(published on May 1, 1978, by Kodansha Ltd.).

The above-mentioned grafting process is a process in which an organic compound that has active free radicals or is capable of producing active free radicals is grafted onto at least a cleaved portion; however, the grafting process may be simultaneously carried out at portions other than the cleaved portion. The grafting process may be carried out simultaneously, while the surface treatment process is being executed, or may be carried out as a separated process.

With respect to the means used for causing the cleavage, various methods, which include irradiation of electromagnetic waves, such as ultrasonic waves, microwaves, ultraviolet rays and infrared rays, ozone function, function of an oxidant, chemical function and mechanical shearing function, may be adopted.

In the present invention, the cleavage is preferably caused by applying at least a mechanical shearing force. Carbon black (structure), surface-treated with an organic compound, is placed in a place where a mechanical shearing force is exerted, and the surface-treated carbon black is preferably treated to give primary particles from the structure. Upon applying the mechanical shearing force, any of the above-mentioned methods used for causing the cleavage may be used in combination.

The same shearing force as the mechanical shearing force used in the surface treatment process is preferably used as the mechanical shearing force in this process.

As described above, the function of the mechanical shearing force is used not only for forming carbon black into fine particles from aggregates to primary particles, but also for cutting chains inside the carbon black to generate active free radicals. The organic compound, which is used in the present invention, and has free radicals or is capable of generating free radicals, includes, for example, an organic compound that is divided by receiving, for example, a function of the field of the mechanical shearing force to be allowed to have or generate active free radicals. In the case when the active free radicals are not sufficiently generated only by the function of the mechanical shearing force, the number of the active free radicals may be compensated for, by using irradiation with electromagnetic waves, such as ultrasonic waves, microwaves, ultraviolet rays and infrared rays, function of ozone or function of an oxidant.

With respect to the device for applying the mechanical shearing force, for example, the following devices may be used: a Polylabo System Mixer (Thermo Electron Co., Ltd.), a refiner, a single-screw extruder, a twin-screw extruder, a planetary extruder, a cone-shaped-screw extruder, a continuous kneader, a sealed mixer and a Z-shaped kneader. With respect to the conditions under which the mechanical shearing force is applied, the same conditions as those in the aforementioned surface treatment process are preferably used from the viewpoint of effectively applying the mechanical shearing force. By using these devices, the mechanical energy is uniformly applied to the entire particles effectively as well as continuously so that the grafting process can be preferably carried out effectively as well as uniformly.

In the above-mentioned surface treatment process and grafting process, the organic compound to be added may be gradually added continuously or intermittently so as to be set to a predetermined amount thereof, or a predetermined amount thereof may be added at the initial stage of the surface treatment process, and processes up to the grafting process may be executed.

With respect to the organic compound to be used for the surface treatment process as a material for the surface treatment and the organic compound to be used for the grafting process as a material to be graft-reacted, the same compounds may be used, or different compounds may be used.

The above-mentioned grafting process is preferably carried out under the condition of the melting point of the used organic compound or more. The upper limit of the temperature condition is preferably set, in particular, within the melting point +200°C, more preferably within the melting point +150°C from the viewpoints of accelerating the grafting reaction and the division into primary particles. In the case when a plurality of kinds of organic compounds are mixed, it is preferable to carry out the temperature setting with respect to the melting point of the organic compound having the highest melting point.

The period of time during which the mechanical shearing force is applied is preferably set within the range from 1 to 100 minutes so as to sufficiently execute the process, from the viewpoint of improving the homogeneity of the reaction.

In the above-mentioned production method, the mechanical shearing force is preferably applied thereto by mixing carbon black and an organic compound that will be described later, without using a solvent. Since the shearing force is applied at a temperature of the melting temperature of the organic compound or more during the reaction, the organic compound is formed into a liquid state and well attached to the surface of the carbon black that is a solid substance uniformly so that the reaction is allowed to proceed effectively. In the case when a solvent is used, although the homogeneity is improved, the transmission of energy is lowered upon applying the mechanical shearing force to cause a low level of activation, with the result that it presumably becomes difficult to effectively carry out the grafting process.

2) Carbon Black as Starting Material

Examples of an applicable carbon black include furnace black, channel black, acetylene black, Lamp Black, and the like and any of these are commercially available and carbon blacks having an aggregate structure. This aggregate structure has "a structure constitution" formed with primary particles or basic particles aggregated, which means a so-called carbon black formed into secondary particles, made of an aggregate of the primary particles. In order to smoothly carry out the surface treatment and grafting reaction of an organic compound onto carbon black, sufficient amounts of oxygen-containing functional groups, such as a carboxyl group, a quinone group, a phenol group and a lactone group, and active hydrogen atoms on the layer face peripheral edge, are preferably placed on the surface of the carbon black.
For this reason, the carbon black to be used in the present invention is preferably allowed to have an oxygen content of 0.1% or more and a hydrogen content of 0.2% or more. In particular, the oxygen content is 10% or less and the hydrogen content is 1% or less.
Each of the oxygen content and the hydrogen content is found as a value obtained by dividing the number of oxygen elements or hydrogen elements by the total number of elements (sum of carbon, oxygen and hydrogen elements).
By selecting these ranges, it is possible to smoothly carry out the surface treatment and grafting reaction of an organic compound onto carbon black.

By selecting the above-mentioned ranges, an organic compound that has free radicals or is capable of generating free radicals is certainly grafted onto carbon black so that the re-aggregation preventive effect can be improved. In the case when the oxygen content and hydrogen content of the carbon black surface are smaller than the above-mentioned ranges, a gaseous phase oxidizing process, such as a heated air oxidization and an ozone oxidization, or a liquid phase oxidizing process by the use of nitric acid, hydrogen peroxide, potassium permanganate, sodium hypochlorite, or bromine water, may be used to increase the oxygen content and the hydrogen content of the carbon black.

3) Organic Compound

An organic compound to be used for surface-treating carbon black in the surface treatment, or to be grafted onto carbon black in the grafting process, corresponds to an organic compound that has free radicals or is capable of generating free radicals.
In the organic compound that is capable of generating free radicals, although not particularly limited, the condition for generating free radicals requires a state in which the organic compound possesses free radicals during the grafting process, in the case of the organic compound to be used in the present invention. With respect to the organic compound, a compound capable of generating free radicals by at least electron movements, a compound capable of generating free radicals through thermal decomposition and a compound capable of generating free radicals derived from cleavage of the compound structure due to a shearing force or the like, may be preferably used.

With respect to the organic compound that has free radicals or is capable of generating free radicals to be used in the present invention, its molecular weight is preferably 50 or more, and the upper limit is preferably 1500 or less. By adopting the organic compound having a molecular weight within this range, it is possible to form carbon black whose surface is substituted by an organic compound having a high molecular weight to a certain degree, and consequently to restrain the resulting primary particles from being re-aggregated. By using the organic compound having a molecular weight of 1500 or less, an excessive surface modification can be avoided, and the characteristics of the organic compound grafted onto the surface are prevented from being excessively exerted; thus, it becomes possible to sufficiently exert the characteristics of the carbon black itself.

With respect to the organic compound to be used for the surface treatment process and the organic compound to be used for the grafting process, the same compound may be used, or different compounds may be used, and a plurality of kinds of organic compounds may be added to the respective processes. In order to control the reaction temperatures and simplify the other conditions, the same organic compound is preferably used for the surface treatment process as well as for the grafting process.

Examples of the organic compound include organic compounds that can capture free radicals on the surface of carbon black, such as a phenol-based compound, an amine-based compound, a phosphate-based compound and a thioether-based compound.

So-called antioxidants and photostabilizers, are preferably used as these organic compounds. More preferably, hindered-phenol based ones and hindered-amine based ones may be used. Those antioxidants of phosphate ester-based compounds, thiol-based compounds and thioether-based compounds may also be used. A plurality of these organic compounds may be used in combination. Depending on the combinations thereof, various characteristics for the surface treatment can be exerted.

In order to positively control the reaction, these organic compounds are preferably the ones not having an isocyanate group. That is, in the case when an organic compound having an excessive reactivity is used, it becomes difficult to provide a uniform grafting reaction, sometimes resulting in a prolonged reaction time and a large quantity of the organic compound to be used. Although not clearly confirmed, the reason for this is presumably because in the case of using an organic compound having a high reactivity as described above, the reaction tends to progress at points other than the surface active points, with the result that the reaction to the active points formed by the mechanical shearing force, which is an original object, becomes insufficient.

Specific examples of the organic compound are shown below:

Phenol-based compounds

(Organic compounds 1 to 88)

(Organic compound 1)

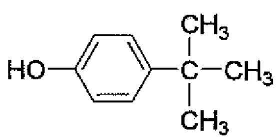

(Organic compound 2)

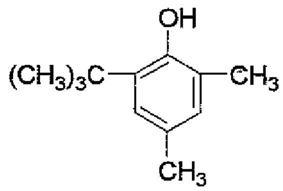

(Organic compound 3)

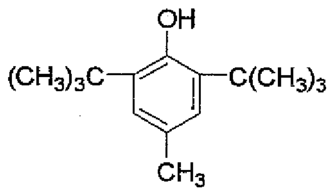

(Organic compound 4)

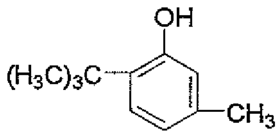

(Organic compound 5)

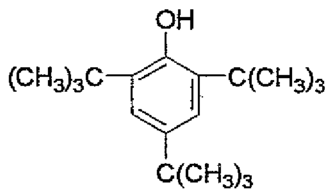

(Organic compound 6)

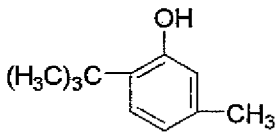

(Organic compound 7)

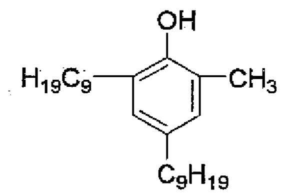

(Organic compound 8)

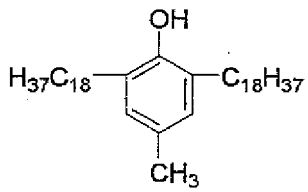

(Organic compound 9)

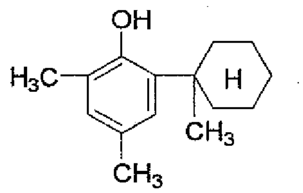

(Organic compound 10)

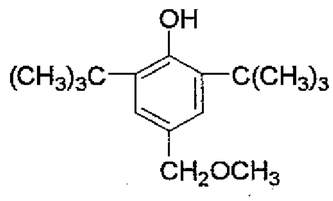

(Organic compound 11)

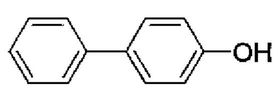

(Organic compound 12)

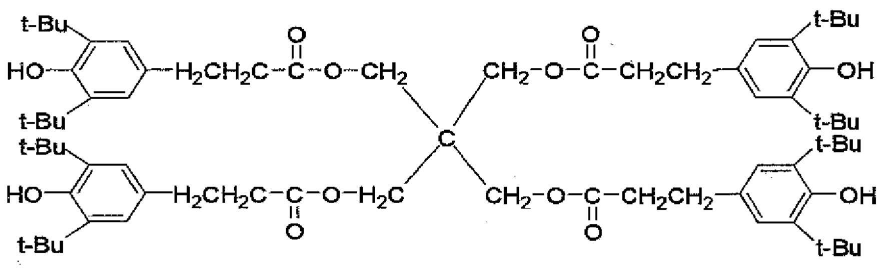

(Organic compound 13)

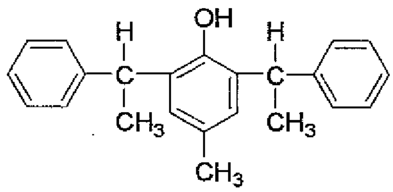

(Organic compound 14)

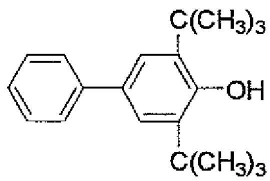

(Organic compound 15)

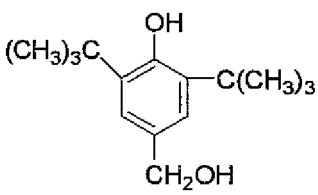

(Organic compound 16)

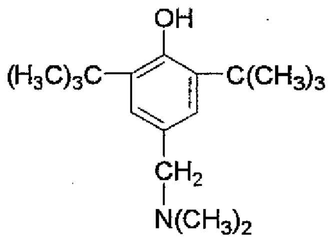

(Organic compound 17)

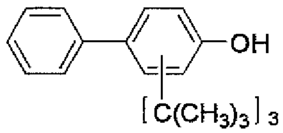

(Organic compound 18)

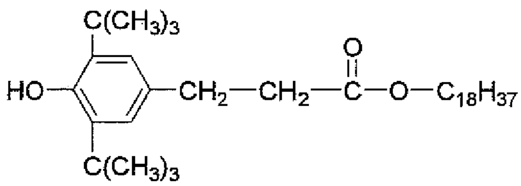

(Organic compound 19)

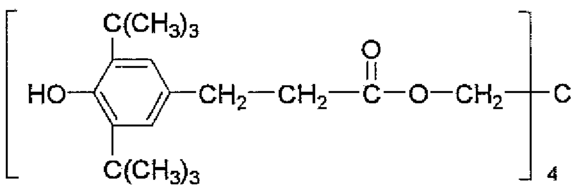

(Organic compound 20)

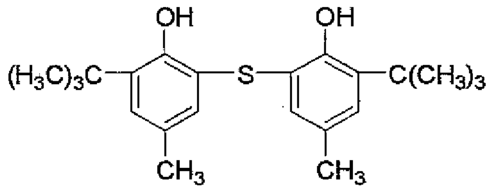

(Organic compound 21)

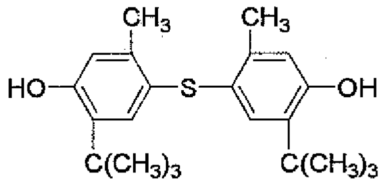

(Organic compound 22)

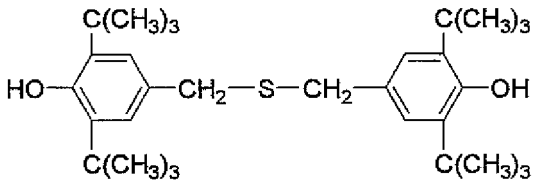

(Organic compound 23)

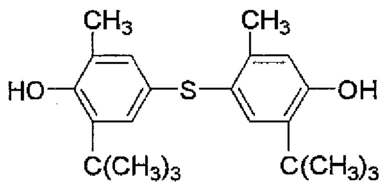

(Organic compound 24)

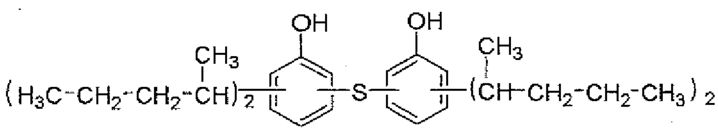

(Organic compound 25)

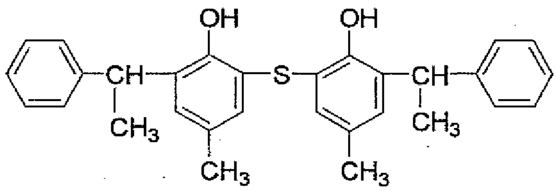

(Organic compound 26)

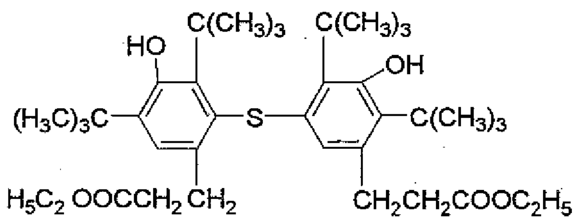

(Organic compound 27)

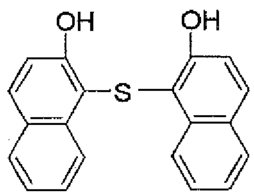

(Organic compound 28)

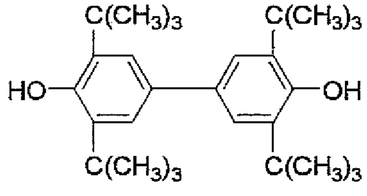

(Organic compound 29)

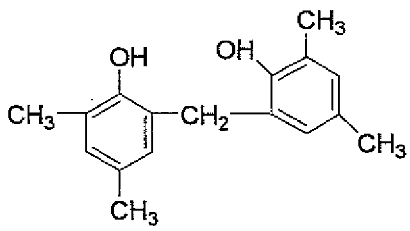

(Organic compound 30)

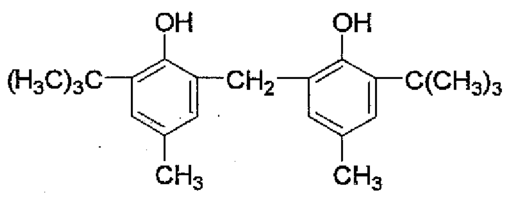

(Organic compound 31)

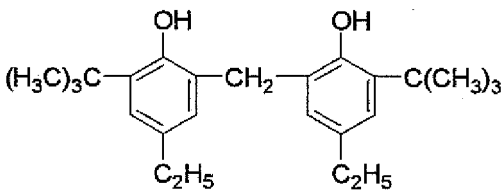

(Organic compound 32)

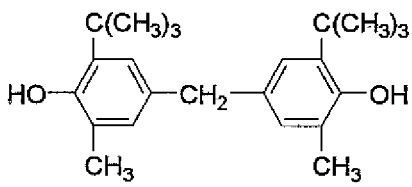

(Organic compound 33)

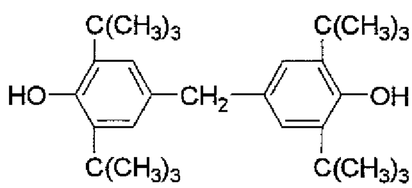

(Organic compound 34)

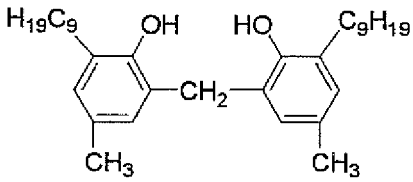

(Organic compound 35)

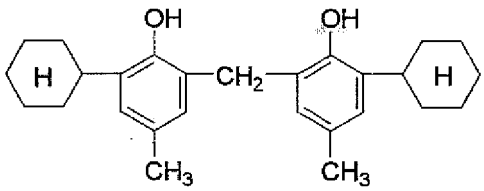

(Organic compound 36)

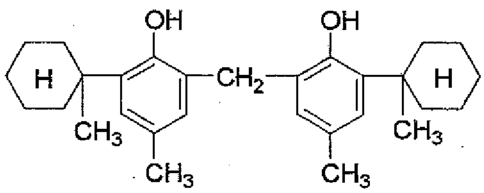

(Organic compound 37)

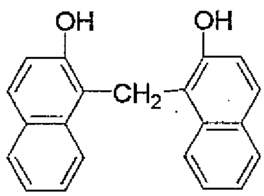

(Organic compound 38)

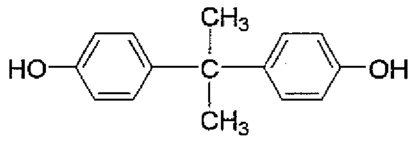

(Organic compound 39)

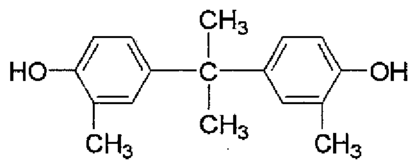

(Organic compound 40)

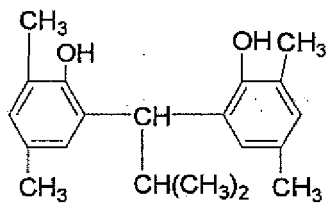

(Organic compound 41)

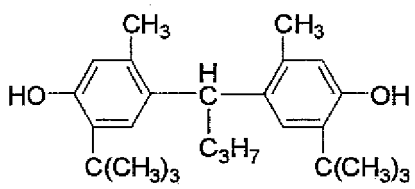

(Organic compound 42)

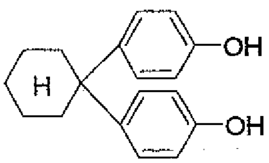

(Organic compound 43)

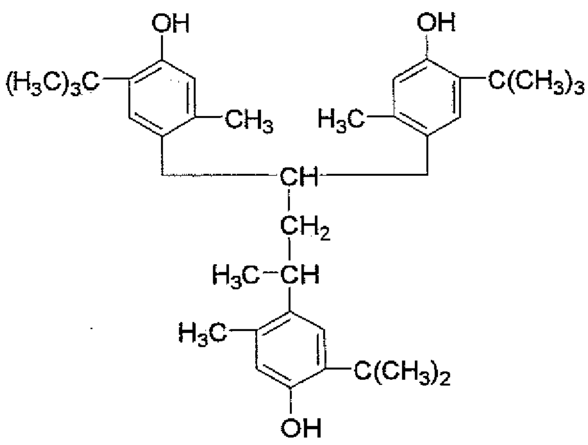

(Organic compound 44)

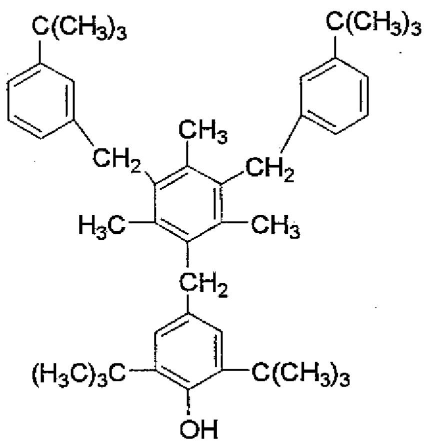

(Organic compound 45)

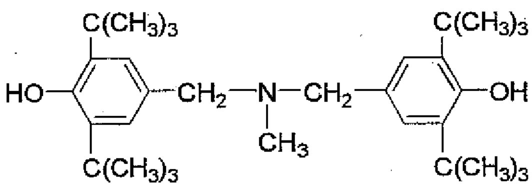

(Organic compound 46)

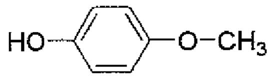

(Organic compound 47)

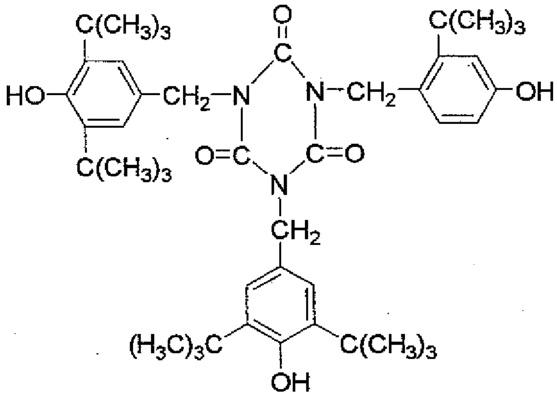

(Organic compound 48)

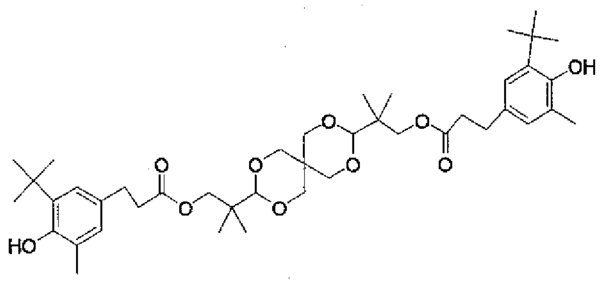

(Organic compound 49)

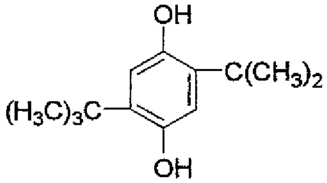

(Organic compound 50)

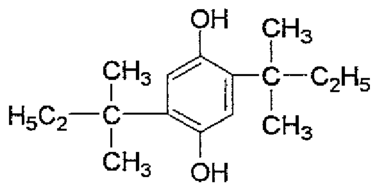

(Organic compound 51)

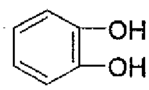

(Organic compound 52)

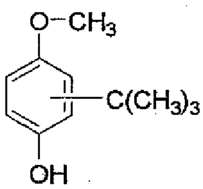

(Organic compound 53)

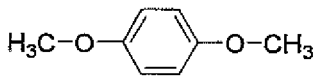

(Organic compound 54)

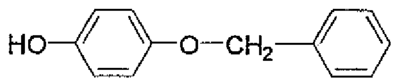

(Organic compound 55)

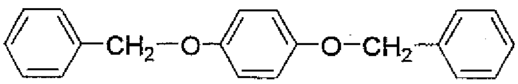

(Organic compound 56)

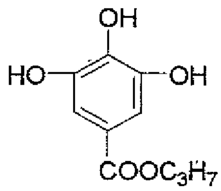

(Organic compound 57)

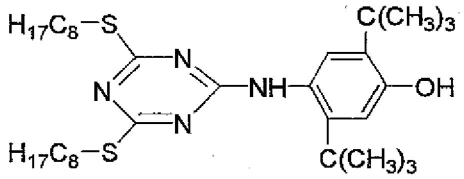

(Organic compound 58)

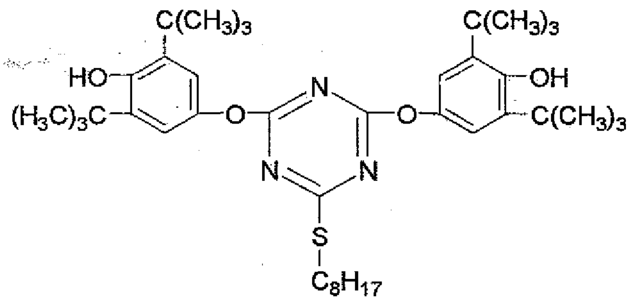

(Organic compound 59)

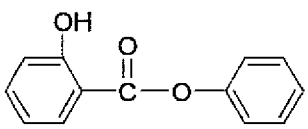

(Organic compound 60)

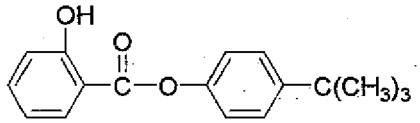

(Organic compound 61)

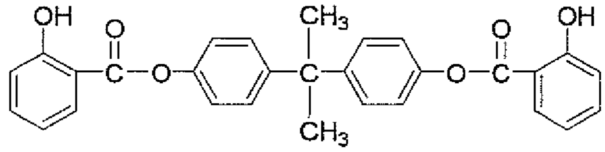

(Organic compound 62)

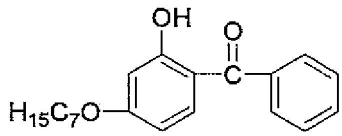

(Organic compound 63)

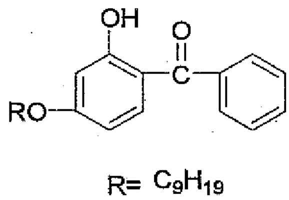

(Organic compound 64)

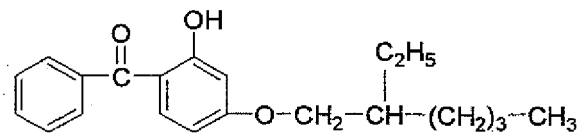

(Organic compound 65)

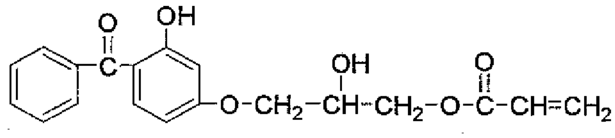

(Organic compound 66)

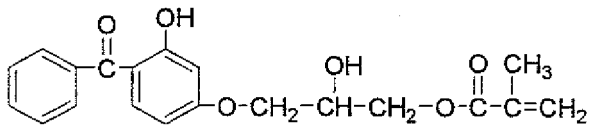

(Organic compound 67)

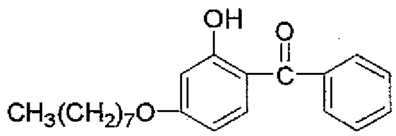

(Organic compound 68)

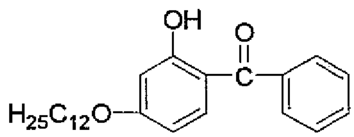

(Organic compound 69)

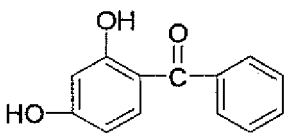

(Organic compound 70)

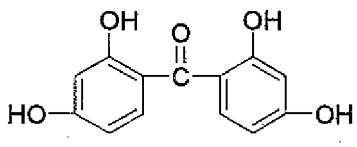

(Organic compound 71)

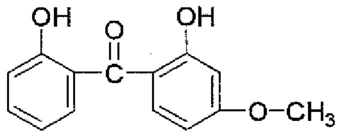

(Organic compound 72)

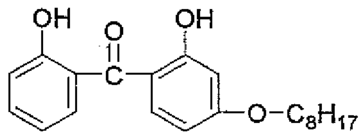

(Organic compound 73)

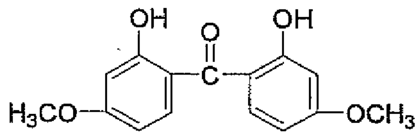

(Organic compound 74)

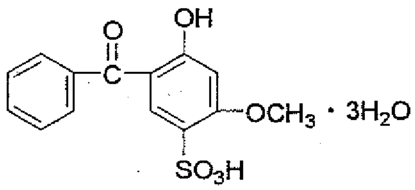

(Organic compound 75)

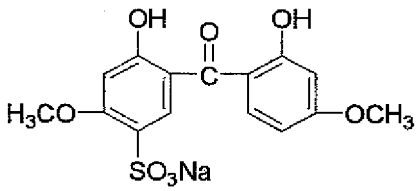

(Organic compound 76)

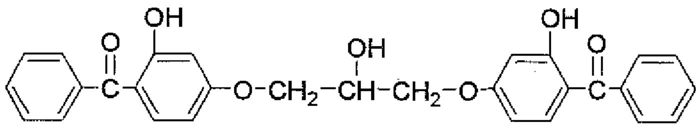

(Organic compound 77)

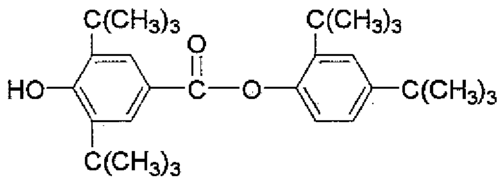

(Organic compound 78)

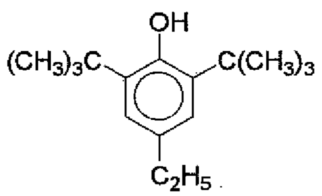

(Organic compound 79)

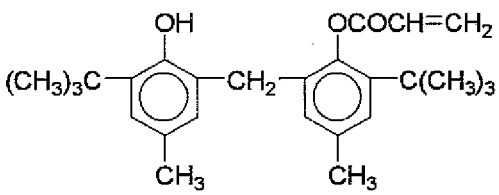

(Organic compound 80)

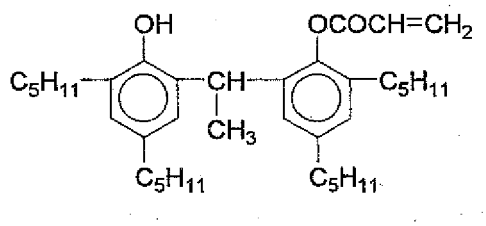

(Organic compound 81)

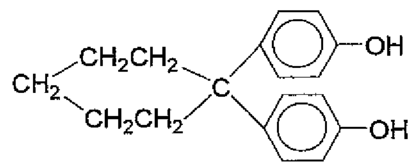

(Organic compound 82)

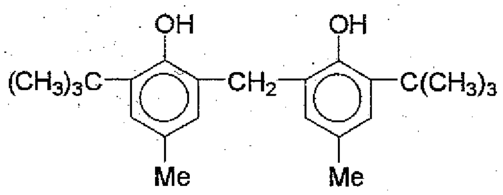

(Organic compound 83)

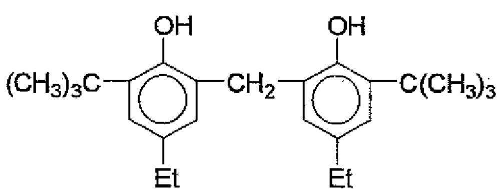

(Organic compound 84)

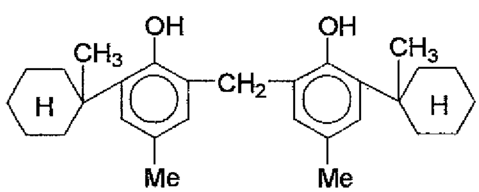

(Organic compound 85)

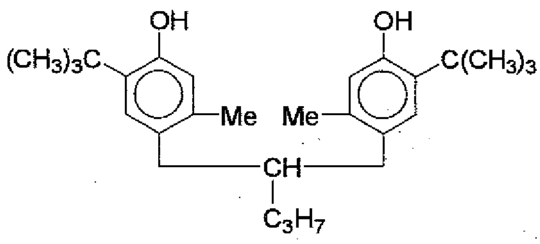

(Organic compound 86)

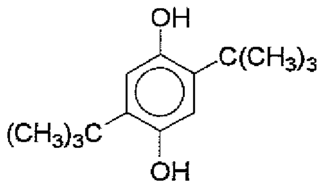

(Organic compound 87)

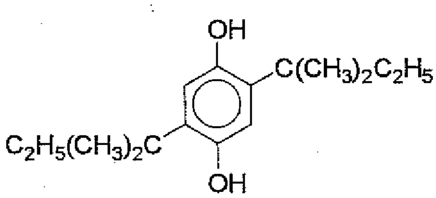

(Organic compound 88)

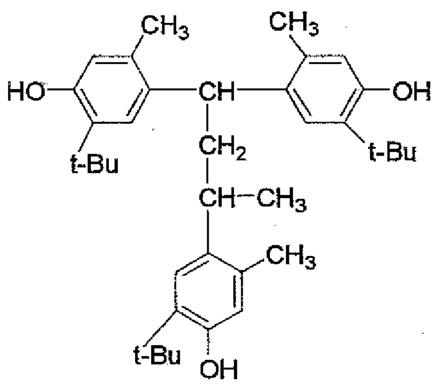

Amine-based compounds

(Organic compounds 89 to 144)

(Organic compound 89)

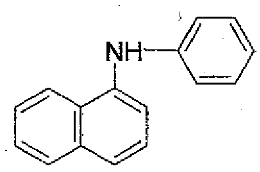

(Organic compound 90)

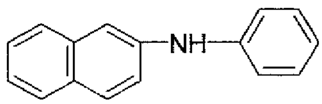

(Organic compound 91)

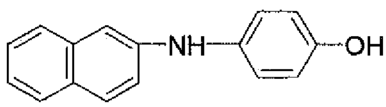

(Organic compound 92)

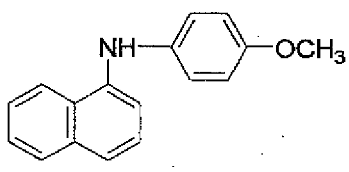

(Organic compound 93)

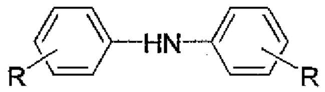

$R= C_7H_{15}$

(Organic compound 94)

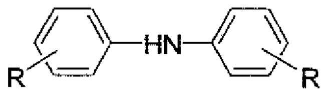

$R= C_8H_{17}$

(Organic compound 95)

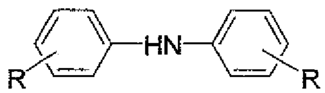

$R= C_9H_{19}$

(Organic compound 96)

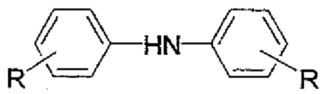

$R= C_{10}H_{21}$

(Organic compound 97)

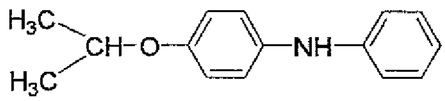

(Organic compound 98)

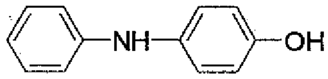

(Organic compound 99)

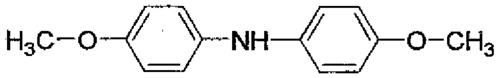

(Organic compound 100)

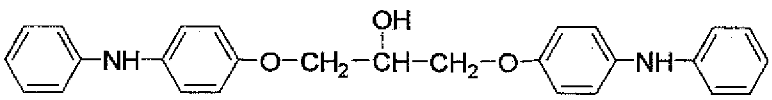

(Organic compound 101)

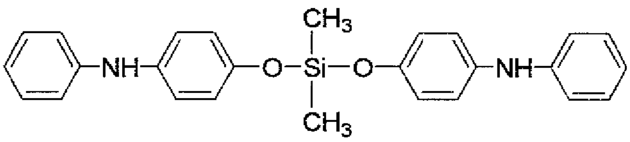

(Organic compound 102)

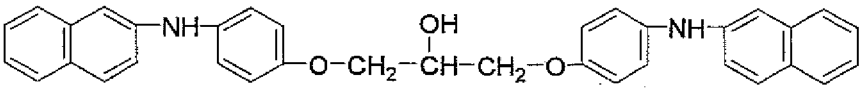

(Organic compound 103)

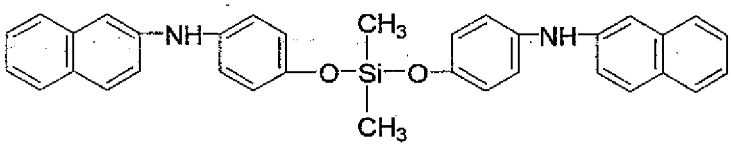

(Organic compound 104)

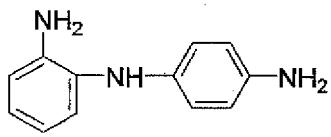

(Organic compound 105)

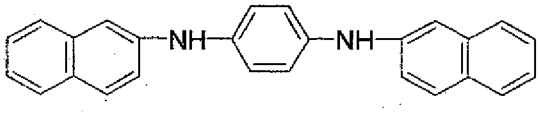

(Organic compound 106)

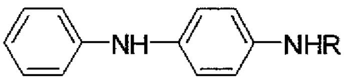

R= $C_7H_{15}$

(Organic compound 107)

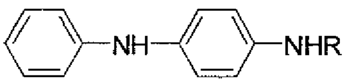

R= $C_8H_{17}$

(Organic compound 108)

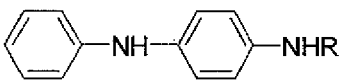

R= $C_9H_{19}$

(Organic compound 109)

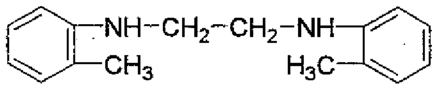

(Organic compound 110)

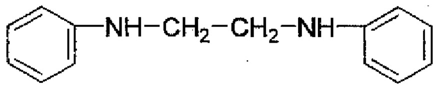

(Organic compound 111)

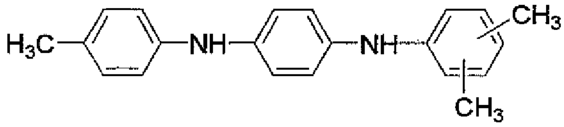

(Organic compound 112)

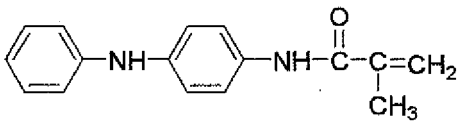

(Organic compound 113)

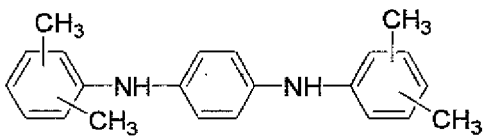

(Organic compound 114)

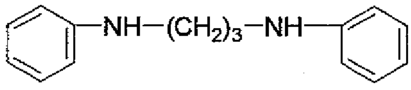

(Organic compound 115)

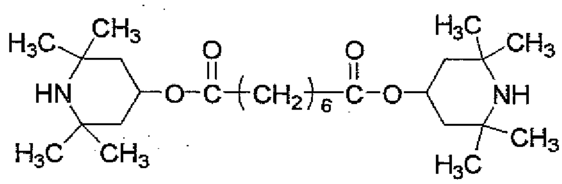

(Organic compound 116)

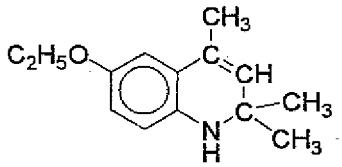

(Organic compound 117)

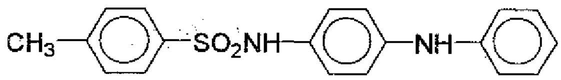

(Organic compound 118)

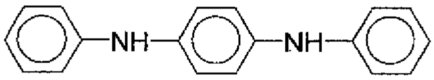

(Organic compound 119)

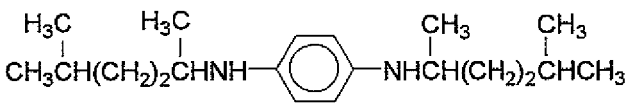

(Organic compound 120)

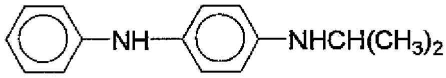

(Organic compound 121)

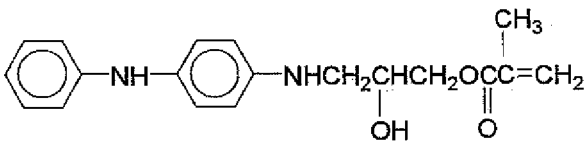

(Organic compound 122)

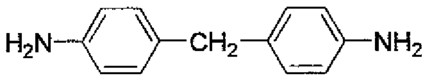

(Organic compound 123)

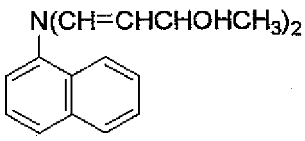

(Organic compound 124)

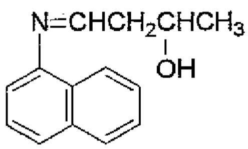

(Organic compound 125)

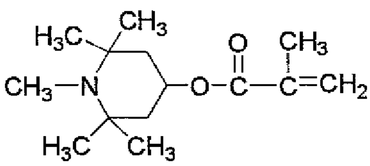

(Organic compound 126)

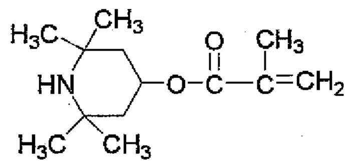

(Organic compound 127)

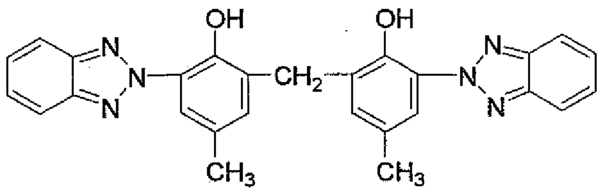

(Organic compound 128)

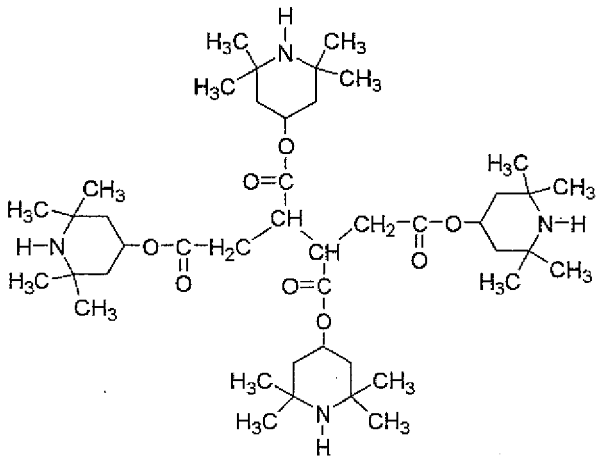

(Organic compound 129)

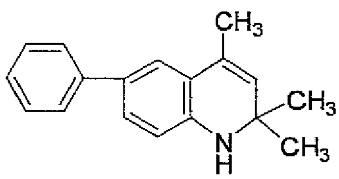

(Organic compound 130)

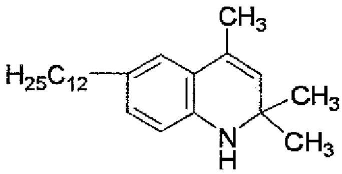

(Organic compound 131)

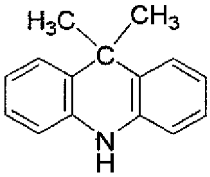

(Organic compound 132)

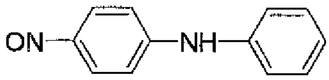

(Organic compound 133)

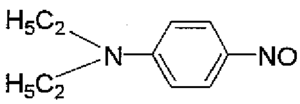

(Organic compound 134)

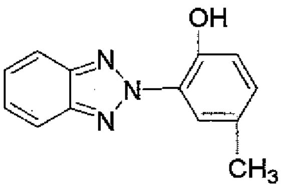

(Organic compound 135)

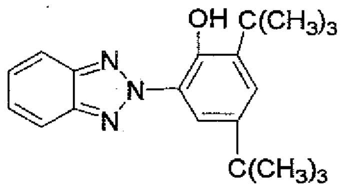

(Organic compound 136)

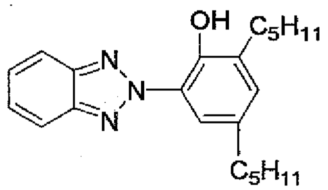

(Organic compound 137)

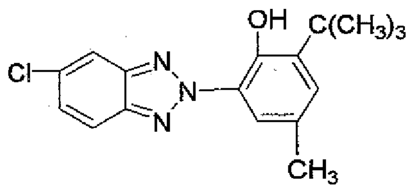

(Organic compound 138)

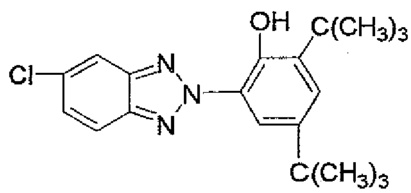

(Organic compound 139)

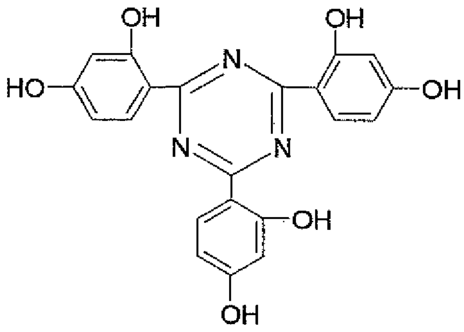

(Organic compound 140)

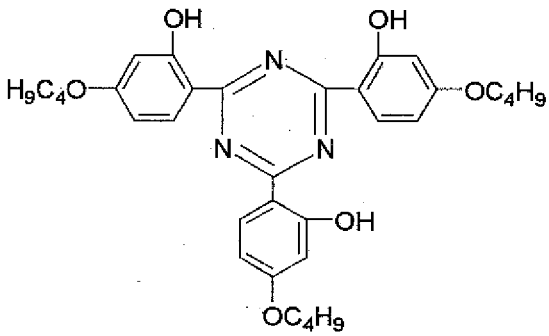

(Organic compound 141)

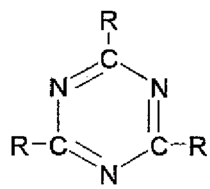

$R = -NHC_6H_4NHC_6H_5$ 、 $-OC_6H_4NHC_6H_5$

(Organic compound 142)

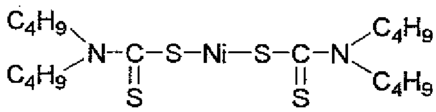

(Organic compound 143)

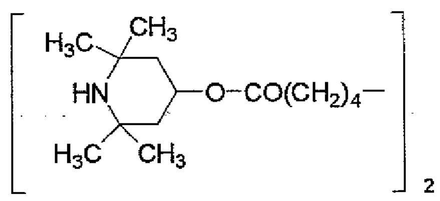

(Organic compound 144)

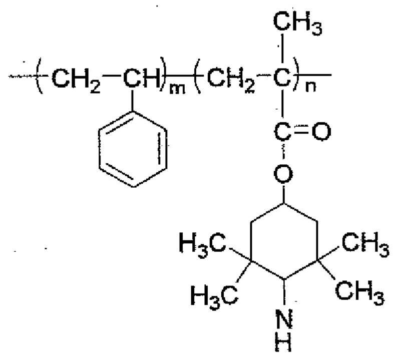

Thiol-based and thioether-based compounds

(Organic compounds 145 to 153)

(Organic compound 1 4 5)

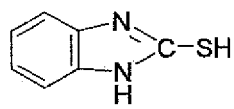

(Organic compound 146)

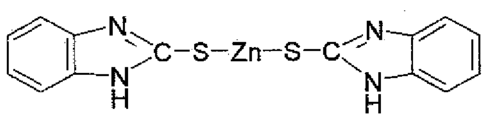

(Organic compound 147)

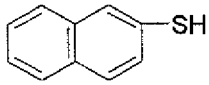

(Organic compound 148)

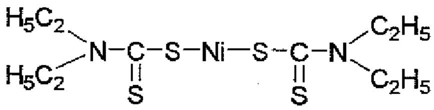

(Organic compound 149)

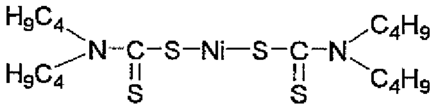

(Organic compound 150)

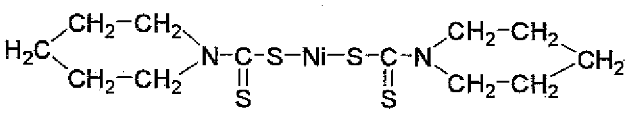

(Organic compound 151)

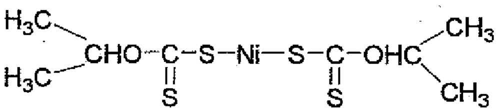

(Organic compound 152)

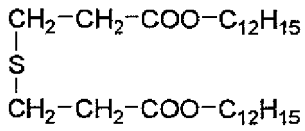

(Organic compound 153)

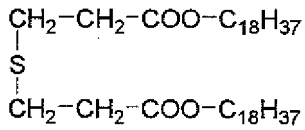

Phosphate ester-based compounds

(Organic compounds 154 to 160)

(Organic compound 154)

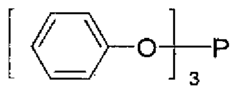

(Organic compound 155)

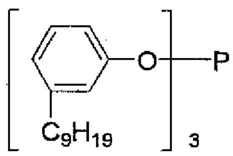

(Organic compound 156)

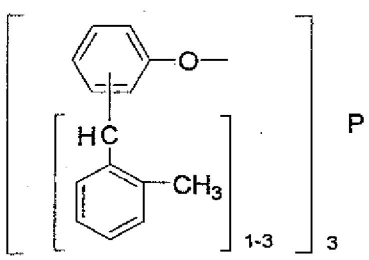

(Organic compound 157)

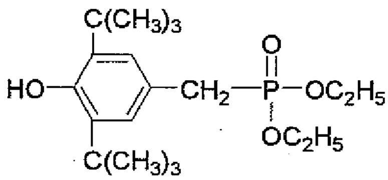

(Organic compound 158)

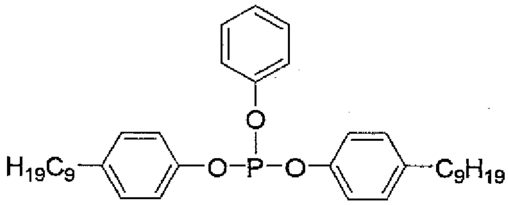

(Organic compound 159)

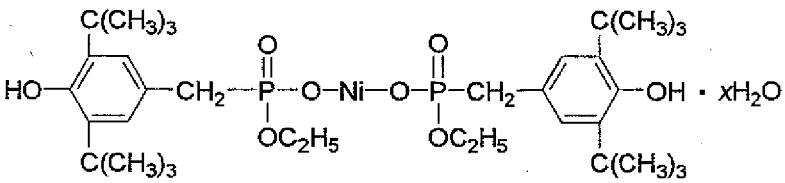

(Organic compound 160)

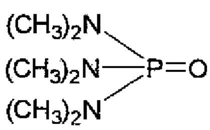

Phenol-based organic compound

(Organic compound 161)

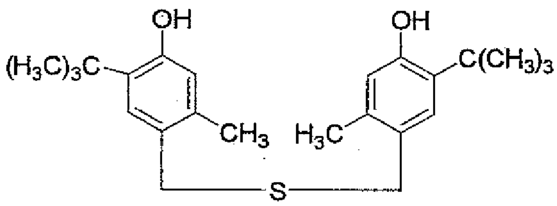

The carbon black of the present invention can be applied to compositions of various fields. Since the carbon black of the present invention has superior dispersibility among various vehicles and achieves superior mechanical properties, it is possible to obtain a superior rubber composition as well as a resin composition that is less vulnerable to degradation.

In order to obtain compositions used in various fields, various known methods may be used for preparing a desired composition except for use of the carbon black of the present invention.

Best Mode for Carrying out the Invention

The following description will discuss the present invention based upon Examples. However, the present invention is not intended to be limited by the Examples.

[EXAMPLE 1]

To 100 parts by weight of carbon black (N220, made by Mitsubishi Chemical Co., Ltd.; number average particle size of Feret's diameter = 210 nm) was added 50 parts by weight of an organic compound 48 (molecular weight = 741, melting point = 125°C), and this was charged into a twin-screw extruder. This twin-screw extruder have two screws so as to carry out a mixing process, and a PCM-30 (made by Ikegai Corporation) is used. This extruder is not designed to carry out a continuous kneading process, but modified so as to carry out a stirring process by two screws with the outlet being sealed. After charging the two components into the device, a stirring process was carried out thereon in a heated state to a first temperature (Tp1) 160°C (melting point + 35°C). The two components were charged so as to have a degree of filling of 94% at stirring. A first stirring velocity (Sv1) was set to 30 screw revolutions per minute. Then, the stirring process was carried out for 10 minutes (first processing time (T1)). Under those conditions, the stirred matter was sampled, and the grafted state was confirmed by using a Soxhlet extractor so that a grafted rate of about 30% was obtained. That is, it was confirmed that a grafting process was progressing on the surface of carbon black.
Then, with respect to the stirring conditions of a mixing device, a second stirring velocity (Sv2) was set to 60 screw revolutions per minute, with a second temperature (Tp2) being set to 180°C (melting point + 55°C), so that the conditions were changed so as to provide a higher mechanical shearing force; thus, the stirring process was carried out for 60 minutes as a second processing time (T2). Thereafter, the stirred matter was cooled, and the processed carbon black was taken out. The above-mentioned organic compound was grafted onto the surface of the carbon black at a grafted rate of 92%. Here, the primary particles were present thereon at 71% on a number basis. The carbon black had a number average particle size of Feret's diameter of 33 nm. This carbon black is referred to as "carbon black 1 of the present invention".

[Examples 2 to 4]

The same processes as those of Example 1 were carried out except that the conditions were changed as shown in Tables 1 and 2 so that carbon blacks 2, 3 and 4 of the present invention were obtained.

[Example 5]

To 100 parts by weight of carbon black (N220, made by Mitsubishi Chemical Co., Ltd.) was added 80 parts by weight of an organic compound 47 (molecular weight = 784, melting point = 221°C), and this was charged into a twin-screw extruder used in Example 1 so as to have a degree of filling of 94%. Next, a stirring process was carried out thereon in a heated state to 240°C (melting point + 19°C)(Tpl). In the stirring process, the stirring velocity (Sv1) was set to 35 screw revolutions per minute, and the stirring process was carried out for 15 minutes (T1). In these states, the stirred matter was sampled, and the grafted state was confirmed by using a Soxhlet extractor so that a grafted rate of about 32% was obtained. That is, it was confirmed that a grafting process was progressing on the surface of carbon black. Next, with respect to the stirring conditions of a mixing device, the stirring velocity (Sv2) was set to 55 screw

revolutions per minute, with the heating temperature (the second temperature Tp2) being set to 270°C (melting point + 49°C), so that the conditions were changed so as to provide a higher mechanical shearing force; thus, the stirring process was carried out for 70 minutes as the processing time (T2). Thereafter, the stirred matter was cooled, and the processed carbon black was taken out. The above-mentioned organic compound was grafted onto the surface of the carbon black at a grafted rate of 72%. The primary particles were present thereon at 53% on a number basis. Moreover, the carbon black had a number average particle size of Feret's diameter of 48 nm. This carbon black is referred to as "carbon black 5 of the present invention".

[Examples 6 to 9]

The same processes as those of Example 1 were carried out except that the conditions were changed as shown in Tables 1 and 2 so that carbon blacks 6 to 9 of the present invention were obtained.

[Example 10]

The same processes as those of Example 1 were carried out except that in place of carbon black (N220, made by Mitsubishi Chemical Co., Ltd.), Raven 1035 (made by Columbia Chemical Co., Ltd.) was used and that the other conditions were changed as shown in Tables 1 and 2 so that carbon black 10 of the present invention was obtained.

[Example 11]

The same processes as those of Example 5 were carried out except that in place of carbon black (N220, made by Mitsubishi Chemical Co., Ltd.), Raven 1035 (made by Columbia Chemical Co., Ltd.) was used and that the other conditions were changed as shown in Tables 1 and 2 so that carbon black 11 of the present invention was obtained.

[Example 12]

The same processes as those of Example 1 were carried out except that the conditions were changed as shown in Tables 1 and 2 so that carbon black 12 of the present invention was obtained.

[Comparative Example 1]

Carbon black (N220, made by Mitsubishi Chemical Co., Ltd.) that had not been subjected to the surface treatment and the grafting process was defined as "comparative carbon black 1."

[Comparative Example 2]

In Example 1, after a lapse of the first processing time (T1) of one minute, a sample was taken out. This sample was defined as "comparative carbon black 2."

[Comparative Example 3]

The same processes as those of Example 1 were carried out except that the organic compound was changed to stearic acid (molecular weight = 284, melting point = 70°C) (comparative compound 1) that would generate no free radicals. This was defined as "comparative carbon black 3."

With respect to each of the carbon blacks 1 to 12 and the comparative carbon blacks 1 to 3 of the present invention, a number average particle size of Feret's diameter of each of the carbon blacks, an average roundness of each of the carbon blacks, a number rate of each of carbon blacks having a roundness within the range of 100 to 130, a number average particle size of Feret's diameter of primary particles, and a number rate of primary particles were shown in Table 3.

[Table 1]

| | Organic compound | | | | First temperature Tp1 (°C) | Difference from melting point of organic compound (°C) | Degree of filling (%) | First stirring velocity (number of revolutions/min) Sv1 | First processing time (min) T1 | Grafted rate when first processing finished (%) |
|---|---|---|---|---|---|---|---|---|---|---|
| | Number | Melting point (°C) | Molecular weight | Added amount (parts) | | | | | | |
| Example 1 | 48 | 125 | 741 | 50 | 160 | +35 | 94 | 30 | 10 | 30 |
| Example2 | 48 | 125 | 741 | 50 | 150 | +25 | 98 | 30 | 10 | 25 |
| Example3 | 48 | 125 | 741 | 50 | 150 | +25 | 98 | 30 | 10 | 25 |
| Example4 | 48 | 125 | 741 | 50 | 150 | +25 | 98 | 40 | 10 | 40 |
| Example5 | 47 | 221 | 784 | 80 | 240 | +19 | 94 | 35 | 15 | 32 |
| Example6 | 88 | 186 | 545 | 50 | 216 | +30 | 98 | 35 | 15 | 35 |
| Example7 | 115 | 84 | 481 | 50 | 104 | +20 | 97 | 30 | 5 | 32 |
| Example8 | 127 | 195 | 659 | 50 | 215 | +20 | 98 | 35 | 5 | 36 |
| Example9 | 128 | 132 | 791 | 50 | 145 | +13 | 91 | 30 | 5 | 26 |
| Example 10 | 48 | 125 | 741 | 50 | 150 | +25 | 94 | 30 | 10 | 33 |
| Example11 | 47 | 221 | 784 | 80 | 231 | +10 | 98 | 30 | 10 | 35 |
| Example12 | 48 | 125 | 741 | 50 | 160 | +35 | 94 | 30 | 10 | 30 |
| Comparative Example1 | None | - | - | - | - | - | - | - | - | - |
| Comparative Example2 | 48 | 125 | 741 | 50 | 150 | +25 | 94 | 30 | 1 | 2 |
| Comparative Example3 | Comparative compound1 | 70 | 284 | 50 | 105 | +35 | 94 | 30 | 10 | 0 |

[Table 2]

| | Second temperature condition (°C) Tp2 | Difference from melting point of organic compound (°C) | Second stirring velocity (number of revolutions/min) Sv2 | Secondary processing time (minute) T2 | Grafted rate when secondary processing time finished |
|---|---|---|---|---|---|
| Example1 | 180 | +55 | 60 | 60 | 92 |
| Example2 | 190 | +65 | 55 | 60 | 93 |
| Example3 | 220 | +95 | 60 | 60 | 95 |
| Example4 | 220 | +65 | 65 | 60 | 97 |
| Example5 | 270 | +49 | 55 | 70 | 72 |
| Example6 | 266 | +80 | 60 | 70 | 83 |
| Example7 | 174 | +90 | 55 | 40 | 93 |
| Example8 | 265 | +70 | 50 | 60 | 94 |
| Example9 | 210 | +78 | 50 | 40 | 91 |
| Example10 | 190 | +65 | 60 | 40 | 94 |
| Example 11 | 250 | +29 | 55 | 40 | 90 |
| Example 12 | 180 | +55 | 50 | 40 | 65 |
| Comparative Example 1 | - | - | - | - | - |
| Comparative Example2 | - | - | - | - | 2 |
| Comparative Example3 | 125 | +55 | 50 | 30 | 0 |

[Evaluation]

Evaluation 1) Dispersibility

To one part by weight of each of the above-mentioned "carbon blacks 1 to 12 of the present invention" and "comparative carbon blacks 1 to 3" was added 100 parts by weight of acetone, and this was dispersed under ultrasonic waves at 25°C for 10 minutes so that each of carbon blacks dispersed solutions was obtained. Thereafter, 5 ml of each of the dispersed solutions was sampled, and subjected to a centrifugal precipitation experiment at 4000 rpm by using a centrifugal separator. The centrifugal separation was carried out for 60 minutes to the maximum, and during the process, the centrifugal separator was stopped every 10 minutes, and the dispersed state of the dispersed solution was visually observed and determined.
The sample having no precipitation even after the centrifugal separation of 60 minutes was defined as A, and with respect to those having precipitations, Table 3 shows the time at which the precipitation was formed.

Evaluation 2) Evaluation of dispersibility in resin

Each of the above-mentioned "carbon blacks 1 to 12 of the present invention" and "comparative carbon blacks 1 to 3" was mixed with a polystyrene resin, and the dispersibility in the resin was evaluated. In this evaluation method, 10 parts by weight of each of the above-mentioned carbon black was added to 100 parts by weight of the polystyrene resin, and this was kneaded by two screws to be molded into a flat plate form so that the degree of gloss of the plate was evaluated by using a gloss meter (made by Nippon Denshoku Industries Co., Ltd.). The degree of gloss of the surface was measured at a measuring angle of 20°. The results of the evaluation 1) and 2) are shown in Table 3
Table 3 shows the results.

[Table 3]

| | Number average particle size of Feret's diameter of CB (nm) | an average roundness of CB | Rate of CB particles in number within 100~130 in roundness (%) | Number average particle size of Feret's diameter of primary particles (nm) | Rate of primary particles in number (%) | Dispersibility | Surface gloss degree (%) |
|---|---|---|---|---|---|---|---|
| Example1 | 33 | 120 | 71 | 25 | 76 | A | 43 |
| Example2 | 40 | 116 | 82 | 25 | 72 | A | 52 |
| Example3 | 39 | 109 | 89 | 25 | 89 | A | 62 |
| Example4 | 28 | 105 | 98 | 25 | 98 | A | 65 |
| Example5 | 48 | 120 | 73 | 28 | 53 | A | 49 |
| Example6 | 47 | 115 | 80 | 28 | 87 | A | 61 |
| Example7 | 41 | 114 | 83 | 28 | 89 | A | 57 |
| Example8 | 28 | 107 | 85 | 28 | 97 | A | 66 |
| Example9 | 36 | 114 | 80 | 28 | 77 | A | 58 |
| Example 10 | 32 | 109 | 86 | 22 | 87 | A | 61 |
| Example 11 | 33 | 107 | 83 | 28 | 83 | A | 57 |
| Example12 | 80 | 128 | 46 | 25 | 41 | A | 35 |
| Comparative Example1 | 210 | 160 | 0 | - | 0 | 10min | 7 |
| Comparative Example2 | 210 | 149 | 2 | could not be measured | 1 | 20min | 11 |
| Comparative Example3 | 210 | 151 | 0 | - | 0 | 10min | 8 |
| * CB: Carbon black | | | | | | | |

In "the carbon blacks 1 to 12 of the present invention", the dispersibility was uniformly maintained preferably even after the centrifugal precipitation test of 60 minutes, while in the comparative carbon blacks 1, 2 and 3, precipitations took place respectively 10 minutes, 20 minutes and 10 minutes later, with the result that the comparative carbon blacks 1, 2 and 3 failed to exert a superior dispersibility.
In "the carbon blacks 1 to 12 of the present invention", superior performance was confirmed also in degree of surface gloss; in contrast, in "the comparative carbon blacks 1, 2 and 3", it was not possible to obtain superior performance.

(Effects of the Invention)

Carbon black of the present invention having a specific number average particle size of Feret's diameter and a specific average roundness thereof can provide a resin or rubber molded materials showing more strength and excellent in gloss and finish on its surface. The present invention makes it possible to stably maintain primary particles, which has not been achieved by the prior art, and can be applied to various industrial fields.
The carbon black of the present invention, which has comparatively good dispersibility, fluidity and compatibility, can be used in many applications, such as transparent conductive materials, radiation-preventive materials, oil ink, powder ink and paints. The production method of the carbon black uses simple processes, achieves low costs without causing any contamination, and also makes it possible to carry out a continuous production in a large lot.

Brief Description of the Drawings

Fig. 1 is an explanatory drawing for Feret's diameter.
Fig. 2 is an explanatory drawing for secondary particles and basic particles.
Fig. 3 is an explanatory drawing for primary particles.
Fig. 4 is an explanatory drawing for conventional carbon black.

## Claims

**1.** A carbon black, comprising carbon black particles having a number average particle size of Feret's diameter of 2 to 100 nm and an average roundness of 100 to 130.

**2.** The carbon black of Claim 1, wherein primary particles are contained at a content of 5% or more on a number basis.

**3.** The carbon black of Claim 1 or Claim 2, wherein an organic compound having or being able to generate an active free radical is grafted on the carbon black particles.

**4.** The carbon black of Claim 3, wherein the organic compound includes at least one of a phenol-based compound and an amine-based compound.

**5.** A carbon black, containing carbon black particles having a roundness of 100 to 130 at a content of 10% or more on a number basis, and having a number average particle size of Feret's diameter is 2 to 100 nm.

Fig. 1

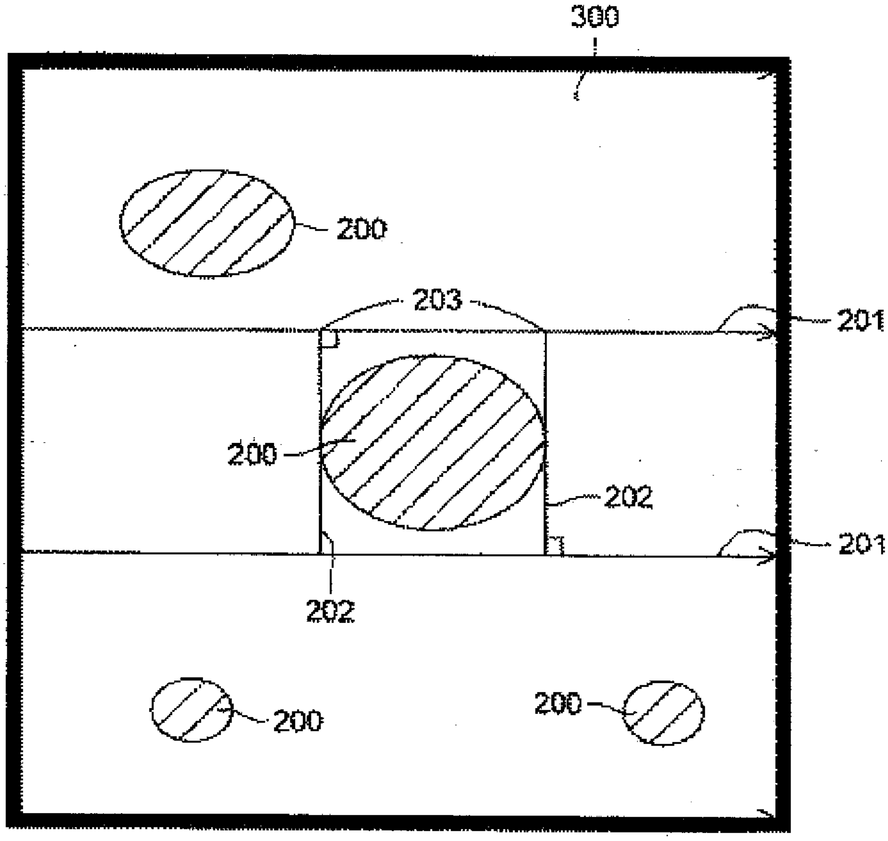

Fig. 2

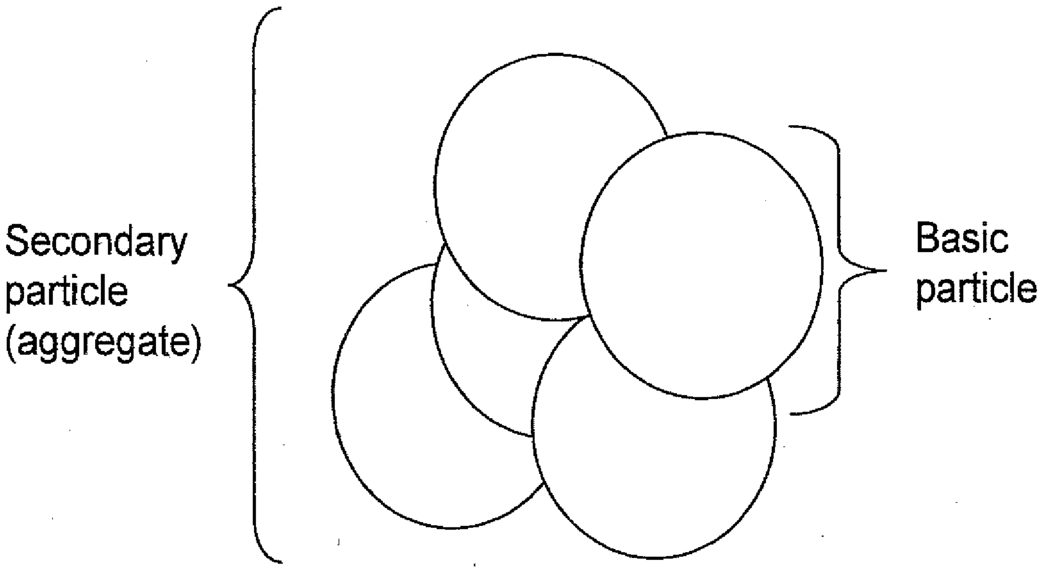

Fig. 3

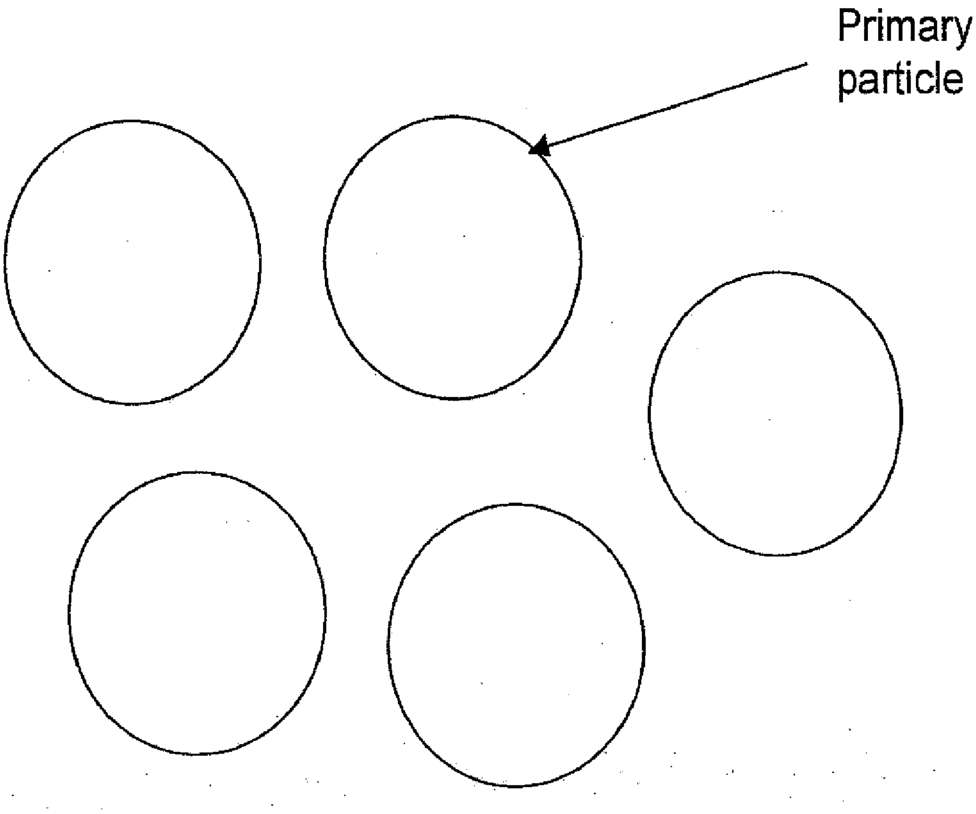

Fig. 4

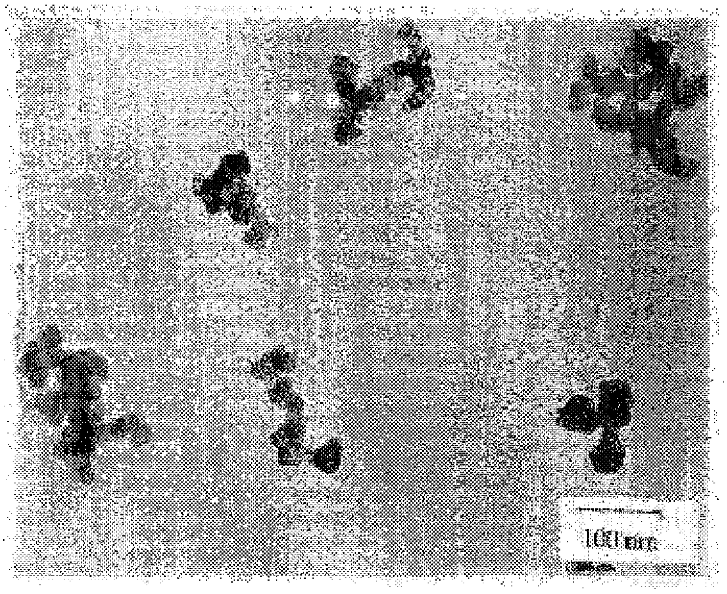

**INTERNATIONAL SEARCH REPORT**

International application No.
PCT/JP2005/010169

A. CLASSIFICATION OF SUBJECT MATTER
*C09C1/48*(2006.01), *1/56*(2006.01)

According to International Patent Classification (IPC) or to both national classification and IPC

B. FIELDS SEARCHED

Minimum documentation searched (classification system followed by classification symbols)
*C09C1/48*(2006.01), *1/56*(2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | Edited by Carbon Black Kyokai, Carbon Black Binran <third edition>, 15 April, 1995 (15. 04.95), issued by Carbon Black Kyokai, table 2.7, Figs. 2.17, 2.18, 2.19, 2.20, 2.34, tables 2.15, 2.16, pages 167 to 175 | 1-5 |

☐ Further documents are listed in the continuation of Box C.

☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 October, 2005 (06.10.05) | 25 October, 2005 (25.10.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Carbon Black. Kodansha Ltd, 01 May 1978